# EUROPEAN PATENT SPECIFICATION

(11) **EP 3 919 569 B1**
(45) Date of publication and mention of the grant of the patent: **26.07.2023**
(21) Application number: 20177705.9
(22) Date of filing: 01.06.2020
(51) Int. Cl.: C08L 101/00, C08L 67/02, C08L 81/04

(54) **THERMOPLASTIC COMPOSITIONS INCLUDING NATURAL FIBER HAVING GOOD MECHANICAL PROPERTIES AND GOOD DIELECTRIC PROPERTIES**
THERMOPLASTISCHE ZUSAMMENSETZUNGEN MIT NATÜRLICHER FASER MIT GUTEN MECHANISCHEN EIGENSCHAFTEN UND GUTEN DIELEKTRISCHEN EIGENSCHAFTEN
COMPOSITIONS THERMOPLASTIQUES COMPRENANT UNE FIBRE NATURELLE PRÉSENTANT DE BONNES PROPRIÉTÉS MÉCANIQUES ET DE BONNES PROPRIÉTÉS DIÉLECTRIQUES

(43) Date of publication of application: 08.12.2021
(73) Proprietor: SHPP Global Technologies B.V., 4612 PX Bergen op Zoom (NL)
(72) Inventor: HE, Yunfei, Pudong New Area, Shanghai 201319 (CN); WANG, Jian, Pudong New Area, Shanghai 201319 (CN); ZHENG, Yun, Pudong New Area, Shanghai 201319 (CN)
(74) Representative: Dehns

(56) References cited:
- WO-A1-2017/187384
- CN-A- 107 298 832

## Description

### FIELD OF THE DISCLOSURE

The present disclosure relates to thermoplastic compositions including natural fibers that have good dielectric properties, and in particular thermoplastic compositions including basalt fiber.

### BACKGROUND OF THE DISCLOSURE

Hybridization of metal and plastic has been a focused area in applications such as consumer electronics, automotive etc., among which nano molding technology (NMT) is one type of metal and plastic integration technology. NMT is one innovative technology wherein plastic resin is injected onto a metal surface, and it provides benefits of miniaturization and aesthetic design freedom compared with other metal-plastic integration technology.

Polybutylene terephthalate (PBT) and its compounding materials are widely used in consumer electronics due to its balanced properties such as chemical resistance, cost, bonding strength with metal, color space etc. PBT and other polymers are typically combined with reinforcing fibers to improve the strength of thermoplastic compositions including the polymers. Commonly used reinforcing fibers in the polymer industry include glass fiber and, to a less extent, other fibers such as carbon fibers. Glass fibers and carbon fibers are not considered to be "natural" however.

These and other shortcomings are addressed by aspects of the disclosure.

WO 2017/187384 describes a thermoplastic composition including a polymeric base resin, a glass fiber component, and a laser direct structuring additive. The laser direct structuring additive includes copper chromite black, copper hydroxide phosphate, tin-antimony cassiterite grey or a combination thereof. The polymeric base resin includes polybutylene terephthalate (PBT), polyamide (PA), polycarbonate (PC), poly(p-phenylene oxide) (PPO), or combinations thereof. The thermoplastic composition has a nano molding technology (NMT) bonding strength of at least about 20 MPa when bonded to aluminum alloy. The thermoplastic composition includes a plating index of at least about 0.25. The disclosed thermoplastic composition can be used to form articles such as NMT bonded covers of consumer electronics devices.

### SUMMARY

Aspects of the disclosure relate to thermoplastic compositions including from about 40 wt% to about 90 wt% of a crystalline polymer, from about 5 wt% to about 50 wt% basalt fibers, and from about 1 wt% to about 20 wt% of an impact modifier. In some aspects the crystalline polymer includes polybutylene terephthalate (PBT), polyphenylene sulfide (PPS), copolymers thereof, or a combination thereof. The thermoplastic compositions are suitable for use in nano molding technology (NMT) applications, and in particular for consumer electronics applications.

### DETAILED DESCRIPTION

The present disclosure relates to thermoplastic compositions for NMT applications that have good mechanical performance and low Dk properties. The thermoplastic compositions include a crystalline polymer such as but not limited to polybutylene terephthalate (PBT) as the base resin and basalt fiber as the reinforcing filler. The thermoplastic compositions are suitable for use in NMT applications, and in particular for consumer electronics applications.

Although basalt is not strictly considered to be biodegradable, it is natural in origin and is therefore appealing for use in thermoplastic compositions where it is becoming increasingly desirable to use natural or "green" components. Basalt is a common volcanic rock, and its chemical composition is similar to that of glass. It includes the components of SiO₂, Al₂O₃, CaO, MgO, K₂O, Na₂O, Fe₂O₃ and FeO. The chemical composition might have effects on the color of basalt, giving it a color ranging from brown to dull green.

The present disclosure can be understood more readily by reference to the following detailed description of the disclosure and the Examples included therein. In various aspects, the present disclosure pertains to thermoplastic compositions including from about 40 wt% to about 90 wt% of a crystalline polymer, from about 5 wt% to about 50 wt% basalt fibers, and from about 1 wt% to about 20 wt% of an impact modifier. In certain aspects the crystalline polymer includes polybutylene terephthalate (PBT), polyphenylene sulfide (PPS), copolymers thereof, or a combination thereof. The thermoplastic compositions exhibit improved bonding strength, dielectric and impact strength properties as compared to conventional compositions that do not include reinforcing filler or that include glass fiber.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein disclose and describe the methods and/or materials in connection with which the publications are cited.

### Definitions

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "BisA," "BPA," or "bisphenol A," which can be used interchangeably, as used herein refers to a compound having a structure represented by the formula: 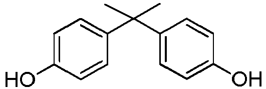 BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions

Aspects of the disclosure relate to thermoplastic compositions including: from about 40 wt% to about 90 wt% of a crystalline polymer; from about 5 wt% to about 50 wt% basalt fibers; and from about 1 wt% to about 20 wt% of an impact modifier.

Crystalline polymer structures are generally very ordered, which is what gives them strength and rigidity. In contrast, amorphous polymers have more flexibility and elasticity. The thermoplastic compositions according to aspects of the disclosure can include any suitable crystalline polymer. In particular aspects the crystalline polymer includes polybutylene terephthalate (PBT), polyphenylene sulfide (PPS), copolymers thereof, or a combination thereof.

In some aspects the basalt fibers include short cut basalt fibers, long basalt fibers, continuous basalt fibers, or a combination thereof. As used herein, short cut basalt fibers have a length of less than 6 millimeters (mm). Long basalt fibers have a length of from 6 mm to 25 mm. Continuous basalt fibers are processed from melted basalt rock and extracted as a continuous fiber.

The impact modifier may include, but is not limited to, an ethylene-acrylic ester-glycidyl methacrylate terpolymer, an ethylene-glycidyl methacrylate copolymer, a polyolefin copolymer, an ethylene acrylate copolymer, or a combination thereof. In some aspects the polyolefin copolymer includes styrene-ethylene-butylene-styrene (SEBS), styrene-ethylene-propylene-styrene (SEPS), styrene-butadiene-styrene (SBS), or a combination thereof.

In some aspects the thermoplastic composition includes from about 0.1 wt% to about 5 wt% of at least one additional additive. The at least one additional additive may include a nucleation agent, stabilizer, additional impact modifier, acid scavenger, anti-drip agent, antioxidant, antistatic agent, chain extender, colorant, de-molding agent, flow promoter, lubricant, mold release agent, plasticizer, quenching agent, flame retardant, UV reflecting additive, or a combination thereof. The at one or more additional additives may be included in the thermoplastic composition in any amount that will not significantly adversely affect the desired properties of the composition.

In certain aspects the thermoplastic composition further includes from about 5 wt% to about 20 wt% of a polycarbonate copolymer having isophthalate-terephthalate-bisphenol A ester units. In a particular aspect the polycarbonate copolymer is LEXAN^{™} SLX resin, available from SABIC.

The thermoplastic compositions have improved properties as compared to conventional compositions that do not include reinforcing filler or that include glass fiber. In some aspects, the thermoplastic composition has a bonding strength of at least 23 megapascals (MPa) as tested in accordance with ISO 19095 using a T-treatment, shear type test method. In other aspects the thermoplastic composition has a bonding strength of at least 35 megapascals (MPa) as tested in accordance with ISO 19095 using a TRI-treatment, butt joint test method.

In particular aspects the composition has a notched Izod impact strength of at least 90 Joules per meter (J/m) at 23 degrees Celsius (°C) as tested in accordance with ASTM D256.

In certain aspects the crystalline polymer includes PBT and the composition has a dielectric constant (Dk) of less than 4.0 at 1.9 gigahertz (GHz) or 5.0 GHz as tested in accordance with the SABIC Method. The SABIC Method is described in the Examples below.

### Methods of Making Thermoplastic Compositions

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded. In particular aspects the article is incorporated into a consumer electronics device.

In one aspect, the thermoplastic composition is applied to a metal surface in a nano molding technology (NMT) process to form the article.

Various combinations of elements of this disclosure are encompassed by this disclosure, e.g., combinations of elements from dependent claims that depend upon the same independent claim.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Comparative and example thermoplastic compositions were formed and extruded using a typical extrusion profile according to Table 1:

**Table 1 - Extrusion Profile**

| **Parameters** | **Unit** | **PBT/basalt fiber** | **PBT/glass fiber** |
|---|---|---|---|
| Compounder Type | NONE | TEM-37BS | TEM-37BS |
| Barrel Size | mm | 1500 | 1500 |
| Die | mm | 4 | 4 |
| Zone 1 Temp | °C | 100 | 100 |
| Zone 2 Temp | °C | 200 | 200 |
| Zone 3 Temp | °C | 240 | 240 |
| Zone 4 Temp | °C | 240 | 240 |
| Zone 5 Temp | °C | 240 | 240 |
| Zone 6 Temp | °C | 250 | 250 |
| Zone 7 Temp | °C | 250 | 250 |
| Zone 8 Temp | °C | 250 | 250 |
| Zone 9 Temp | °C | 250 | 250 |
| Zone 10 Temp | °C | 250 | 250 |
| Zone 11 Temp | °C | 250 | 250 |
| Die Temp | °C | 260 | 260 |
| Screw speed | rpm | 200 | 200 |
| Throughput | kg/hr | 50 | 50 |
| Torque | % | 70-90 | 70-90 |
| Vacuum 1 | bar | -0.08 | -0.08 |
| Side Feeder 1 speed | rpm | 250 | 250 |
| Melt temperature | °C | 250-270 | 250-270 |

The extruded compositions were injected molded according to a typical molding profile shown in Table 2:

**Table 2 - Molding Profile**

| **Parameters** | **Unit** | **PBT/basalt fiber** | **PBT/glass fiber** |
|---|---|---|---|
| Condition: Pre-drying time | Hour | 4 | 4 |
| Condition: Pre-drying temp | °C | 120 | 120 |
| Molding Machine | None | FANUC, SE180 | |
| Mold Type (insert) | None | ASTM Tensile, Flexural, & Izod bars | |
| | | 100×70×1.6mm plaques | |
| Hopper temp | °C | 50 | 50 |
| Zone 1 temp | °C | 240 | 240 |
| Zone 2 temp | °C | 250 | 250 |
| Zone 3 temp | °C | 260 | 260 |
| Nozzle temp | °C | 250 | 250 |
| Mold temp | °C | 120 | 120 |
| Screw speed | rpm | 100 | 100 |
| Back pressure | kgf/cm² | 30 | 30 |
| Cooling time | s | 20-30 | 20-30 |
| Injection speed | mm/s | 50-100 | 50-100 |
| Holding pressure | kgf/cm² | 800-1000 | 800-1000 |
| Max. Injection pressure | kgf/cm² | 1000-1500 | 1000-1500 |

NMT-capable thermoplastic compositions were developed using PBT as the base resin and basalt fiber as the reinforcing fiber (Ex1.1, Ex1.2 and Ex1.3). Comparative compositions without any reinforcing fiber and with glass fiber were also formed (C1.1 and C1.2, respectively). An acrylate based terpolymer (Lotader^{®} AX8900) was included as an impact modifier in all compositions, and a styrene-ethylene/butylene-styrene (SEBS) impact modifier was used in comparative example C1.2 and example Ex1.3. As basalt fiber has the natural color of dark brown, no colorant is used for example compositions Ex1.1-Ex1.3. Carbon black was included as a colorant in C1.2, as glass fiber provides no natural color.

**Table 3 - Example and Comparative Compositions**

| **Item Description** | **Unit** | **C1.1** | **C1.2** | **Ex1.1** | **Ex1.2** | **Ex1.3** |
|---|---|---|---|---|---|---|
| PBT195, SABIC | % | 41.2 | 25.0 | 33.7 | 26.2 | 25.2 |
| PBT315, SABIC | % | 42 | 24.05 | 34.5 | 27 | 26 |
| Lotader^{®} AX8900 (IM) | % | 4 | 4 | 4 | 4 | 4 |
| SEBS (IM) | % | | 2 | | | 2 |
| Basalt chopped strand fibers, sizing silane for Phenolic, PA, PP and PE resins | % | | | 15 | 30 | 30 |
| Nittobo FGF CSG 3PA-830 | % | | 30 | | | |
| SLX 90/10 | % | 12 | 12 | 12 | 12 | 12 |
| Mono zinc phosphate (MZP) | % | 0.1 | 0.1 | 0.1 | 0.1 | 0.1 |
| Pentaerythritol tetrastearate | % | 0.2 | 0.3 | 0.2 | 0.2 | 0.2 |
| Tinuvin 329 | % | 0.3 | 0.25 | 0.3 | 0.3 | 0.3 |
| Hindered Phenol stabilizer | % | 0.1 | 0.1 | 0.1 | 0.1 | 0.1 |
| Irgafos 168, Alkanox 240 | % | 0.1 | | 0.1 | 0.1 | 0.1 |
| Phosphite stabilizer | % | | 0.2 | | | |
| PBT/Carbon black master batch | % | | 2.0 | | | |

Various properties of the example and comparative compositions were evaluated; results are shown in Table 4:

**Table 4 - Properties of Compositions of Table 3**

| **Property** | **Unit** | **C1.1** | **C1.2** | **E1.1** | **E1.2** | **E1.3** |
|---|---|---|---|---|---|---|
| Bonding Strength, T-treatment, shear type, ISO 19095 | MPa | / | 31.9 | 29.5 | 31.8 | 31.2 |
| Bonding Strength, TRI-treatment, butt joint, ISO 19095 | MPa | / | 39.3 | 39.0 | 40.1 | 37.4 |
| Density, ASTM D792 (Specific gravity) | g/cm3 | 1.296 | 1.497 | 1.398 | 1.518 | 1.497 |
| MVR, ASTM D1238, 270 °C/5 kg | cm3/ 10min | 79.3 | 27.6 | 39.3 | 23.6 | 21.3 |
| Notched IZOD Impact, ASTM D256, 23 °C, 5 lbf/ft | J/m | 87.8 | 125 | 56.3 | 101 | 119 |
| Unnotched IZOD Impact, ASTM D256, 23 °C, 5 lbf/ft | J/m | 912 | 846 | 360 | 551 | 560 |
| HDT, ASTM D648, 1.82 MPa/3.2 mm | °C | 58 | 193 | 162 | 187 | 189 |
| HDT, ASTM D648, 0.45 MPa/3.2 mm | °C | 85 | 218 | 207 | 215 | 215 |
| Flexural Modulus, ASTM D790, 3.2 mm, 1.27 mm/min | MPa | 2160 | 8070 | 4960 | 8400 | 8120 |
| Flexural Strength @ break, ASTM D790, 3.2 mm, 1.27 mm/min | MPa | 79.8 | 184 | 145 | 185 | 185 |
| Tensile Modulus, ASTM D638, 5 mm/min | MPa | 2313 (50mm /min) | 8820 | 5459 | 9160 | 8753 |
| Tensile Strength @ break, ASTM D638, 5 mm/min | MPa | 22.8 | 117 | 89.9 | 117.2 | 111.4 |
| Tensile Elongation @ break, ASTM D638, 5 mm/min | % | 58 | 2.5 | 3 | 2.7 | 2.8 |
| Dk, 1.9 GHz, SABIC Method | / | 2.92 | 3.63 | 3.15 | 3.49 | 3.48 |
| Df, 1.9 GHz, SABIC Method | / | 0.0086 | 0.0092 | 0.0093 | 0.0098 | 0.0096 |
| Dk, 5.0 GHz, SABIC Method | / | 2.94 | 3.62 | 3.2 | 3.49 | 3.47 |
| Df, 5.0 GHz, SABIC Method | / | 0.0063 | 0.0079 | 0.007 | 0.0080 | 0.0079 |

The "SABIC Method" for determining dielectric constant (Dk) and dissipation factor (Df) includes measuring these values using a QWED split post dielectric resonator and an Agilent network analyzer. For the 1.9 gigahertz (GHz) measurement, the minimum sample size is 70 millimeter (mm) × 70 mm and the maximum sample thickness is 4 mm. For the 5.0 GHz measurement, the minimum sample size is 30 mm × 30mm and the maximum sample thickness is 2 mm.

The mechanical performance and dielectric properties of the developed compositions is listed in Table 4. With the same loading level of basalt fiber or flat glass fiber, the PBT/basalt fiber has similar mechanical performance, however has much lower Dk at 1.9 GHz and 5 GHz (>0.1). Thus, basalt fiber could have the potential to replace flat glass fiber for applications which require similar mechanical properties and lower Dk. For NMT applications, bonding strength with metal is similar for both basalt fiber and flat glass fiber at the same loading level. Plus, as the basalt fiber has the natural color of dark brown, it might have potential advantages over glass fiber for NMT applications which require dark colors, as the floating glass fiber might cause "surface whitening" issues upon on further processing.

The present disclosure relates to thermoplastic compositions with good mechanical performance, low Dk properties and good metal bonding performance. Using a crystalline polymer such as but not limited to PBT as the base resin, basalt fiber as the filler, and an impact modifier such as a glycidyl methacrylate (GMA)-based copolymer and/or SEBS, mechanical performance of the disclosed compositions was similar as that of conventional flat glass fiber compositions. In addition, the bonding strength of the disclosed compositions with aluminum under T-treatment was higher than 30 megapascals (MPa), similar to that of the flat glass fiber compositions and Dk was much lower (>0.1). In general, the good metal bonding strength, good mechanical performance and low Dk properties make the disclosed thermoplastic compositions good candidates for glass fiber replacement in NMT applications. Further, basalt fiber - having a natural color of dark brown - may provide potential advantages over glass fiber for dark color applications.

The above description is intended to be illustrative, and not restrictive. For example, the above-described examples (or one or more aspects thereof) may be used in combination with each other. Other aspects can be used, such as by one of ordinary skill in the art upon reviewing the above description. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims.

## Claims

1. A thermoplastic composition comprising:
from about 40 wt% to about 90 wt% of a crystalline polymer;
from about 5 wt% to about 50 wt% basalt fibers; and
from about 1 wt% to about 20 wt% of an impact modifier.

2. The thermoplastic composition according to claim 1, wherein the crystalline polymer comprises polybutylene terephthalate (PBT), polyphenylene sulfide (PPS), copolymers thereof, or a combination thereof.

3. The thermoplastic composition according to claim 1 or 2, wherein the basalt fibers comprise short cut basalt fibers, long basalt fibers, continuous basalt fibers, or a combination thereof.

4. The thermoplastic composition according to any of claims 1 to 3, wherein the impact modifier comprises an ethylene-acrylic ester-glycidyl methacrylate terpolymer, an ethylene-glycidyl methacrylate copolymer, a polyolefin copolymer, an ethylene acrylate copolymer, or a combination thereof.

5. The thermoplastic composition according to claim 4, wherein the polyolefin copolymer comprises styrene-ethylene-butylene-styrene (SEBS), styrene-ethylene-propylene-styrene (SEPS), styrene-butadiene-styrene (SBS), or a combination thereof.

6. The thermoplastic composition according to any of claims 1 to 5, further comprising from about 0.1 wt% to about 5 wt% of at least one additional additive.

7. The thermoplastic composition according to claim 6, wherein the at least one additional additive comprises a nucleation agent, stabilizer, additional impact modifier, acid scavenger, anti-drip agent, antioxidant, antistatic agent, chain extender, colorant, de-molding agent, flow promoter, lubricant, mold release agent, plasticizer, quenching agent, flame retardant, UV reflecting additive, or a combination thereof.

8. The thermoplastic composition according to any of claims 1 to 7, wherein the composition further comprises from about 5 wt% to about 20 wt% of a polycarbonate copolymer having isophthalate-terephthalate-bisphenol A ester units.

9. The thermoplastic composition according to any of claims 1 to 8, wherein the composition has a bonding strength of at least 23 megapascals (MPa) as tested in accordance with ISO 19095 using a T-treatment, shear type test method.

10. The thermoplastic composition according to any of claims 1 to 9, wherein the composition has a bonding strength of at least 35 megapascals (MPa) as tested in accordance with ISO 19095 using a TRI-treatment, butt joint test method.

11. The thermoplastic composition according to any of claims 1 to 10, wherein the crystalline polymer comprises polybutylene terephthalate (PBT) and the composition has a dielectric constant (Dk) of less than 4.0 at a 1.9 gigahertz (GHz) measurement or a 5.0 GHz measurement as tested using the method described in the specification.

12. The thermoplastic composition according to any of claims 1 to 11, wherein the composition has a notched Izod impact strength of at least 90 Joules per meter (J/m) at 23 degrees Celsius (°C) as tested in accordance with ASTM D256.

13. An article comprising the thermoplastic composition according to any of claims 1 to 12.

14. The article according to claim 13, wherein the article comprises the thermoplastic composition applied to a metal surface in a nano molding technology (NMT) process.

15. The article according to claim 13 or 14, wherein the article is incorporated into a consumer electronics device.

## Patentansprüche

1. Thermoplastische Zusammensetzung, umfassend:
zu etwa 40 Gew.-% bis etwa 90 Gew.-% ein kristallines Polymer;
zu etwa 5 Gew.-% bis etwa 50 Gew.-% Basaltfasern; und
zu etwa 1 Gew.-% bis etwa 20 Gew.-% einen Schlagzähmodifikator.

2. Thermoplastische Zusammensetzung nach Anspruch 1, wobei das kristalline Polymer Polybutylenterephthalat (PBT), Polyphenylensulfid (PPS), Copolymere davon oder eine Kombination davon umfasst.

3. Thermoplastische Zusammensetzung nach Anspruch 1 oder 2, wobei die Basaltfasern kurzgeschnittene Basaltfasern, lange Basaltfasern, kontinuierliche Basaltfasern oder eine Kombination davon umfassen.

4. Thermoplastische Zusammensetzung nach einem der Ansprüche 1 bis 3, wobei der Schlagzähmodifikator ein Ethylen-Acrylester-Glycidylmethacrylatterpolymer, ein Ethylen-Glycidylmethacrylatcopolymer, ein Polyolefincopolymer, ein Ethylenacrylatcopolymer oder eine Kombination davon umfasst.

5. Thermoplastische Zusammensetzung nach Anspruch 4, wobei das Polyolefincopolymer Styrol-Ethylen-Butylen-Styrol (SEBS), Styrol-Ethylen-Propylen-Styrol (SEPS), Styrol-Butadien-Styrol (SBS) oder eine Kombination davon umfasst.

6. Thermoplastische Zusammensetzung nach einem der Ansprüche 1 bis 5, ferner umfassend zu etwa 0,1 Gew.-% bis etwa 5 Gew.-% mindestens ein zusätzliches Additiv.

7. Thermoplastische Zusammensetzung nach Anspruch 6, wobei das eine oder die mehreren zusätzlichen Additive ein Nukleationsmittel, einen Stabilisator, einen zusätzlichen Schlagzähmodifikator, einen Säurefänger, ein Antitropfmittel, ein Antioxidans, ein Antistatikmittel, einen Kettenverlängerer, einen Farbstoff, ein Entformungsmittel, eine Fließhilfe, ein Schmiermittel, ein Formtrennmittel, einen Weichmacher, ein Abschreckmittel, ein Flammschutzmittel, ein UVreflektierendes Additiv oder eine Kombination davon umfassen.

8. Thermoplastische Zusammensetzung nach einem der Ansprüche 1 bis 7, wobei die Zusammensetzung ferner zu etwa 5 Gew.-% bis etwa 20 Gew.-% ein Polycarbonatcopolymer umfasst, das Isophthalat-Terephthalat-Bisphenol-A-Estereinheiten aufweist.

9. Thermoplastische Zusammensetzung nach einem der Ansprüche 1 bis 8, wobei die Zusammensetzung eine Bindungsfestigkeit von mindestens 23 Megapascal (MPa) aufweist, wie gemäß ISO 19095 unter Verwendung eines T-Behandlungs-, Schertyp-Testverfahrens getestet.

10. Thermoplastische Zusammensetzung nach einem der Ansprüche 1 bis 9, wobei die Zusammensetzung eine Bindungsfestigkeit von mindestens 35 Megapascal (MPa) aufweist, wie gemäß ISO 19095 unter Verwendung eines TRI-Behandlungs-, Stoßverbindungstestverfahrens getestet.

11. Thermoplastische Zusammensetzung nach einem der Ansprüche 1 bis 10, wobei das kristalline Polymer Polybutylenterephthalat (PBT) umfasst und die Zusammensetzung eine Dielektrizitätskonstante (Dk) von weniger als 4,0 bei einer Messung von 1,9 Gigahertz (GHz) oder einer Messung von 5,0 GHz ausweist, wie unter Verwendung des in der Patentschrift beschriebenen Verfahrens getestet.

12. Thermoplastische Zusammensetzung nach einem der Ansprüche 1 bis 11, wobei die Zusammensetzung eine Izod-Kerbschlagzähigkeit von mindestens 90 Joule pro Meter (J/m) bei 23 Grad Celsius (°C) aufweist, wie gemäß ASTM D256 getestet.

13. Erzeugnis, umfassend die thermoplastische Zusammensetzung nach einem der Ansprüche 1 bis 12.

14. Erzeugnis nach Anspruch 13, wobei das Erzeugnis die thermoplastische Zusammensetzung umfasst, die auf eine Metalloberfläche in einem Nanoformtechnologieprozess (NMT-Prozess) aufgebracht wird.

15. Erzeugnis nach Anspruch 13 oder 14, wobei das Erzeugnis in eine Unterhaltungselektronikvorrichtung integriert ist.

## Revendications

1. Composition thermoplastique comprenant :
d'environ 40 % en poids à environ 90 % en poids d'un polymère cristallin ;
d'environ 5 % en poids à environ 50 % en poids de fibres de basalte ; et
d'environ 1 % en poids à environ 20 % en poids d'un modificateur d'impact.

2. Composition thermoplastique selon la revendication 1, dans laquelle le polymère cristallin comprend du téréphtalate de polybutylène (PBT), du sulfure de polyphénylène (PPS), des copolymères de ceux-ci, ou une combinaison de ceux-ci.

3. Composition thermoplastique selon la revendication 1 ou 2, dans laquelle les fibres de basalte comprennent des fibres de basalte à coupe courte, des fibres de basalte longues, des fibres de basalte continues, ou une combinaison de celles-ci.

4. Composition thermoplastique selon l'une quelconque des revendications 1 à 3, dans laquelle le modificateur d'impact comprend un terpolymère d'éthylène-ester acrylique-méthacrylate de glycidyle, un copolymère d'éthylène-méthacrylate de glycidyle, un copolymère polyoléfinique, un copolymère d'éthylène-acrylate, ou une combinaison de ceux-ci.

5. Composition thermoplastique selon la revendication 4, dans laquelle le copolymère polyoléfinique comprend styrène-éthylène-butylène-styrène (SEBS), styrène-éthylène-propylène-styrène (SEPS), styrène-butadiène-styrène (SBS), ou une combinaison de ceux-ci.

6. Composition thermoplastique selon l'une quelconque des revendications 1 à 5, comprenant en outre d'environ 0,1 % en poids à environ 5 % en poids d'au moins un additif supplémentaire.

7. Composition thermoplastique selon la revendication 6, dans laquelle l'au moins un additif supplémentaire comprend un agent de nucléation, un stabilisant, un modificateur d'impact supplémentaire, un piégeur d'acide, un agent anti-goutte, un antioxydant, un agent antistatique, un agent d'allongement de chaîne, un colorant, un agent démoulant, un promoteur d'écoulement, un lubrifiant, un agent de démoulage, un plastifiant, un agent d'extinction, un ignifugeant, un additif réfléchissant les UV, ou une combinaison de ceux-ci.

8. Composition thermoplastique selon l'une quelconque des revendications 1 à 7, la composition comprenant en outre d'environ 5 % en poids à environ 20 % en poids d'un copolymère polycarbonate ayant des motifs isophtalate-téréphtalate-ester de bisphénol A.

9. Composition thermoplastique selon l'une quelconque des revendications 1 à 8, la composition ayant une résistance de liaison d'au moins 23 mégapascals (MPa) telle que testée conformément à ISO 19095 à l'aide d'un procédé de test de type cisaillement à traitement en T.

10. Composition thermoplastique selon l'une quelconque des revendications 1 à 9, la composition ayant une résistance de liaison d'au moins 35 mégapascals (MPa) telle que testée conformément à ISO 19095 à l'aide d'un procédé de test de joint bout à bout à traitement TRI.

11. Composition thermoplastique selon l'une quelconque des revendications 1 à 10, dans laquelle le polymère cristallin comprend du téréphtalate de polybutylène (PBT) et la composition a une constante diélectrique (Dk) inférieure à 4,0 à une mesure à 1,9 gigahertz (GHz) ou à une mesure à 5,0 GHz telle que testée à l'aide du procédé décrit dans la description.

12. Composition thermoplastique selon l'une quelconque des revendications 1 à 11, la composition ayant une résistance au choc Izod entaillé d'au moins 90 Joules par mètre (J/m) à 23 degrés Celsius (°C) telle que testée conformément à ASTM D256.

13. Article comprenant la composition thermoplastique selon l'une quelconque des revendications 1 à 12.

14. Article selon la revendication 13, l'article comprenant la composition thermoplastique appliquée à une surface en métal dans un processus de technologie de nanomoulage (NMT).

15. Article selon la revendication 13 ou 14, l'article étant incorporé dans un dispositif électronique grand public.
